# EUROPEAN PATENT APPLICATION

(11) **EP 3 715 005 A1**
(43) Date of publication of application: **30.09.2020**
(21) Application number: 20000114.7
(22) Date of filing: 18.03.2020
(51) Int. Cl.: B21D 5/08, B21D 11/10, B21D 35/00, H01R 4/66, H02G 13/00, B21D 53/00

(54) **EARTHING ELECTRODE, MANUFACTURING PROCESS AND MACHINERY**

(30) Priority: 25.03.2019 RO 201900185
(71) Applicant: Betak SA, 420063 Bistrita Nasaud (RO)
(72) Inventor: Bulea, Caius Casiu, 420033 Bistrita (RO)
(74) Representative: Isoc, Dorin

(57) **Abstract**

The earthing electrode is intended to be included in the electrical circuit protection of electrical networks and installations.

For a simple construction, the electrode (the rod) is made of as a single piece of sheet metal.

For a simple embodiment, the blank in the form of a piece of sheet metal (g) cut to a rectangular shape with a jagged side (h) on which are congruent isosceles triangles, piece of sheet metal that deforms by bending like a star profile on some lines (j1, j2, j3. j4, j5, j6, j7, respectively j8) which pass through the tops and bases of the triangles of the teeth and at the end the stellar profile is closed by a juxtaposition and folding.

For the application of the process of obtaining the electrode, a specialized machinery consisting of a storage and rolling unit (UPD), a cutting-cropping unit (UD) along the electrode length, a preparation unit (UP) and a unit of step rolling (UR) consisting of a battery of rollers forming the electrode's wings and which in the last phase closes the star profile by juxtaposition and folding the side strip (i).

## Description

The invention relates to an earthing electrode (rod) completing the protection circuit for overcurrent and electrical discharges, a manufacturing process for obtaining it, and machinery for applying the process under efficient industrial conditions.

For the production of earthing electrodes, a manufacturing process is known which uses a blank as strips cut lengthwise, followed by bending and continuous welding throughout [1].

The disadvantage of this process is the lack of unity of the technological operations, lack which leads to an increase of the complexity of the means of accomplishment.

Another situation is that in which, the strips of sheet are cross-sectional profiled, each along a polygonal line, the strips which are subsequently welded, partly or entirely, on length [2].

The disadvantage of this solution is the difficulties arising in applying it in terms of the complexity of the specialized machine that should use the process.

Another way to manufacture earthing electrodes (rods) is to consider one or more tubular semi-finished products made or covered with different layers, inserted into each other and then profiled stellar by the use of stepped roller batteries [3].

The disadvantage of this solution is the increasing of the energy consumption imposed by the increased deformation forces.

The problem solved by the invention responds to the requirement to obtain an earthing electrode from a cheap semi-manufactured product, in simple technological conditions that can be achieved automatically.

The earthing electrode according to the invention removes the disadvantages above mentioned because for a simple construction it consists of a single piece of sheet metal. Further, for a simple embodiment, the blank in the form of a piece of sheet cut to a rectangular shape with a jagged side on which are congruent isosceles triangles, piece of sheet metal that deforms by bending like a star profile on lines passing through the tops and bases of the triangles of the teeth and in the end the star profile is closed by a twist. For the application of the process of manufacturing the electrode (the rod), a specialized machine consisting of a storage and rolling unit, a cutting-cropping unit along the length of the electrode, a preparation unit and a rolling unit are set up from a battery of rollers that form the wings of the electrode and which, in the last phase, closes the star profile by bending the side strip.

The advantages of the invention are the simplicity of technological achievement under the conditions of economic efficiency of the used semi-finished product.

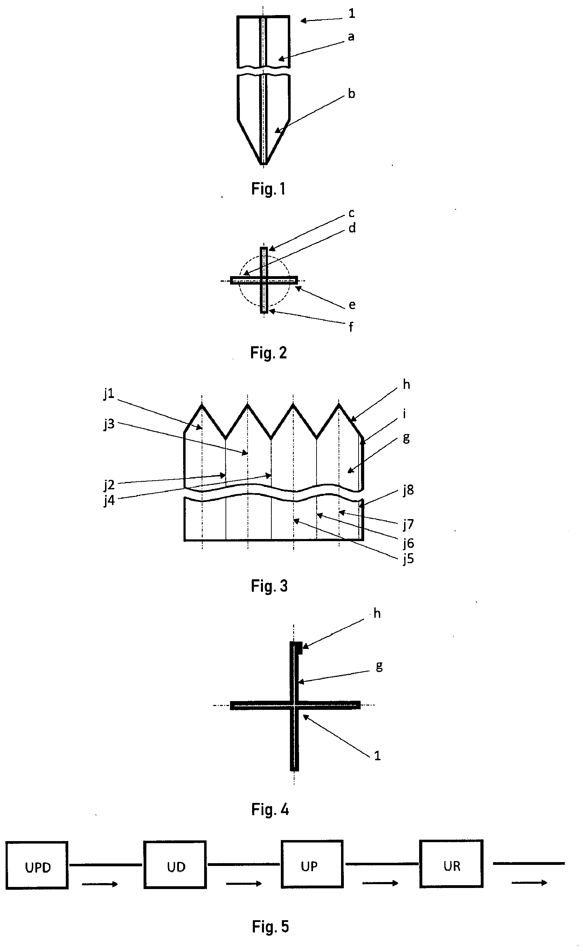

The following is an example of embodiment of the invention in connection with Fig. 1... Fig. 5 which shows:
- Fig.1: - the profile of the earth electrode (rod) in lateral view;
- Fig.2: - top view of the earth electrode (socket);
- Fig. 3: - view of the unfolded semi-finished sheet metal from which the earthing electrode (rod) is profiled by plastic deformation.
- Fig. 4: - detail in view of the earthing electrode with the bending of the sheet metal for closing the transversal profile by plastic deformation.
- Fig. 5: - the process steps of achieving the electrode (rod) by plastic deforming of sheet metal.

The earthing electrode 1, according to the invention (Fig. 1, Fig. 2) has a body a, which at one end has a carrot profile b which ensures penetration of the soil where it is disposed. The cross-sectional profile of the electrode is a stellar one with wings c, d, e, respectively f, usually equal.

The electrode is made from a blank sheet metal g (Fig. 3) which has a rectangular shape with the length equal to the length of the electrode and the width approximately equal to twice the sum of the widths of the wings c, d, e, respectively f. One of the short sides h of the blank is cut with a number of four triangular teeth with the base perpendicular to the length of the electrode and isosceles congruent triangle-shaped having a height equal to the length of the electrode penetration carrot.

The manufacturing of the electrode involves the reconstruction of the specific wings c, d, e, and f respectively, by bending along their length, following lines j1, j2, j3, j4, j5, j6, j7, respectively j8, which pass through the tops of the upper and lower triangular edges respectively. On one of the sides of the blank, a strip is provided which closes the star profile with a folding (Fig. 4).

Obtaining the electrode implies that the primary material is a strip of sheet metal of sufficient length and arranged in the coil. From the coil, the strip of sheet metal is unrolled, then cut to the appropriate length, with the contour of the jagged side. In order to obtain the stellar profile of the electrode, the plastic deformation operation is achieved by rolling in such a way that the wings are formed gradually and, in the last step, with the profiling, the closing of the folding i. along the length of the electrode, is also produced.

The machine implementing the process (Fig. 5) is made up of UPD, storage and running unit, where the strip-shaped blank is oriented to a cutting-cropping unit, UD along the electrode length. The cut strip is taken over by a preparation unit, UP and directed to a step rolling unit UR made up of a battery of rolls forming the electrode's wings and which, in the last phase, closes the star profile by juxtaposition an folding the side strip i.

### References

[1] BULEA, Caius Casiu. Earthing electrode and manufacturing process thereof (In Romanian). Romanian patent application a 2018 00109.
[2] BULEA, Caius Casiu. Semi-finished product for earthing electrodes and manufacturing process therefore (In Romanian). Romanian patent application a 2018 00539.
[3] BULEA, Caius Casiu. Multilayer earthing electrode (rods) and manufacturing process therefore. Romanian patent application a 2018 00876.

## Claims

1. An earthing electrode (rod) designed to achieve the overcurrent protection circuit of electrical networks and installations as a body (a) which at one end has a carrot profile (b) which ensures penetration of the soil where it is disposed and its transversal profile of the electrode is a star with some wings (c, d. e, and f respectively), usually equal, wherein that the entire transverse profile is rectangular (g) obtained from bent a metal sheet and at the end is closed along a length with a folding (i) obtained by bending.

2. The process of manufacturing an electrode as in claim 1, therein the electrode is made of a sheet metal (g) having a rectangular shape having a length equal to the length of the electrode and having a width approximately equal to twice the sum of the widths of the transversely wings of star profile (c, d, e, respectively f) and one of the short sides of the blank (h) is cut with a number of four triangular teeth with perpendicular base on the length of the electrode and as congruent isosceles triangles having a height equal to the length of the core by penetrating the electrode to which a longitudinal folding zone (i) is added, the entire piece of sheet is deformed by plastic deformation along longitudinal lines (j1. j2, j3, j4, j5, j6, j7, and j8 respectively) passing through the upper and lower tops of the triangular teeth.

3. The machinery for applying the process as in claim 2 therein it is made up of a storage and rolling unit (UPD), where the strip-shaped blank is oriented towards a cutting-cropping unit (UD) along the electrode length, the strip thus cut is taken over by a preparation unit (UP) and directed to a step rolling unit (UR) made up of a battery of rollers forming the electrode's fins and which, in the last phase, closes the star profile by juxtaposition and folding the side strip (i) of the blank.
